# EUROPEAN PATENT APPLICATION

(11) **EP 4 744 849 A1**
(43) Date of publication of application: **20.05.2026**
(21) Application number: 24212870.0
(22) Date of filing: 14.11.2024
(51) Int. Cl.: B27N 1/00, B27N 3/18, B27N 3/20, B27N 5/02, B27N 7/00, B27N 3/04, B27N 3/12, B27N 5/00, B29C 43/00, B29C 43/02, B31F 1/00, B65D 25/14, B65D 25/34

(54) **METHOD FOR DRY MANUFACTURING RIGID CELLULOSE PRODUCTS**

(71) Applicant: Yangi AB, 432 48 Varberg (SE)
(72) Inventor: NAIDJONOKA, Polina, 421 70 Västra Frölunda (SE)
(74) Representative: Brann AB

(57) **Abstract**

The present invention relates to a method and an apparatus (1) for dry manufacturing rigid cellulose product (2) having essentially non-flat general shape from a cellulose blank (10). The method comprises the steps of providing an air-laid cellulose blank (10), transferring the cellulose blank (10) to a product forming unit (11), and producing rigid cellulose products (2) in the product forming unit (11), wherein the product forming unit (11) comprises heating means for heating the cellulose blank (10) to a forming temperature T, the product forming unit (11) comprising a moulding tool having a first mould part (15) and a second mould part (16), wherein the heated cellulose blank (10) is pressed between the first mould part (15) and the second mould part (16) by applying a forming pressure P in the axial direction of the moulding tool, and removing the pressed cellulose product from the moulding tool. The primed cellulose pulp sheet (7) has an added barrier dispersion (34) that comprises water and/or fat resistance barrier dispersion (34) that comprises water (35) and a barrier additive (36), wherein the pressed cellulose product (2) is provided with water and/or fat resistance barrier properties, and the method further comprises the step of adding a nano-coating to the pressed cellulose product (2) in order to also provide gas transmission resistance properties to the final cellulose product (2).

## Description

### Technical field of the Invention

The present invention relates in general to the field of apparatus and method for dry manufacturing of rigid cellulose products having non-flat general shape from a cellulose blank, wherein the cellulose product has barrier properties, i.e. hydrophobic and/or oleophobic properties. The barrier properties of the cellulose product are water resistance (hydrophobicity) and/or fat resistance (oleophobicity) as well as gas transmission resistance (e.g. oxygen and water vapor), such that the cellulose products will be able to withstand and hold moisture/fat and prevent gas transmission therethrough. The present invention also relates to a rigid cellulose product having such barrier properties. Such cellulose products may be used for packaging, storing, transporting and/or displaying other products such as electronics, tools, jewelry, food, dairy products, meat, fish, cosmetics, etc., and/or may be used as single/multiple use disposable articles, such as trays, cups, lids, plates, etc. By cellulose products means products that mainly consists of the cellulose part of organic matter. The term fat as used herein, includes fat/oil from vegetables and fat/grease from animals.

The present invention relates specifically to a method for dry manufacturing rigid cellulose products having essentially non-flat general shape from a cellulose blank, wherein the method comprises the general steps of:
- providing an air-laid cellulose blank,
- transferring the cellulose blank into a product forming unit,
- producing cellulose products in the product forming unit, wherein the product forming unit comprises heating means for heating the cellulose blank to a forming temperature T, the product forming unit comprising a moulding tool having a first mould part and a second mould part, wherein the heated cellulose blank is pressed between the first mould part and the second mould part by applying a forming pressure P in the axial direction of the moulding tool, and
- removing the pressed cellulose product from the moulding tool.

The present invention also relates specifically to an apparatus for dry manufacturing rigid cellulose products having essentially non-flat general shape from a cellulose blank, wherein the apparatus comprises:
- a product forming unit that comprises heating means for heating the cellulose blank to a forming temperature T and a moulding tool having a first mould part and a second mould part, wherein the moulding tool is configured to press heated cellulose blank between the first mould part and the second mould part by applying a forming pressure P in the axial direction of the moulding tool for manufacturing cellulose products, and
- an out-feed device configured to be inserted into the moulding tool between the first mould part and the second mould part after the pressing of the cellulose product in order to engage the cellulose product, and configured to remove the cellulose product from the moulding tool.

Thus, the present invention belongs to the general fields of air/dry-laid cellulose blanks and thermoforming rigid cellulose products.

### Background of the Invention

There are many situations where it is desirable to provide two-dimensional (2D) or three-dimensional (3D) shaped objects made of sustainable materials, such as biomaterials, instead of using plastic/polymer materials. When storing/holding items that for instance have a certain content of moisture and/or fat, known trays/products made of plastic/polymer materials have the advantage that the tray material itself constitute the barrier properties to prevent penetration of moisture/fat and gas transmission and avoid disintegration of the tray. However, there is a general requirement to decrease the overall use of plastics, in favour of biodegradable materials.

A biodegradable material commonly used for packaging and disposable articles is wet moulded pulp based on cellulose fibres and water. Such wet moulded pulp has the advantage of being considered a sustainable material, since it is produced from biomaterials and can be recycled after use. Wet moulded pulp comprises more or less only water and separated cellulose fibers, and consequently, wet moulded pulp has been popular to use for primary packaging applications (packaging next to the article), for secondary packaging applications (assembly of such primary packages), as well as for manufacturing of disposable articles/products. Such cellulose products make use of a liner film acting as a barrier against moisture/fat in order to enhance the barrier properties of the cellulose tray.

However, a common disadvantage with all wet-forming techniques is the need for large amounts of water during the preparations of the cellulose pulp and the need for drying during the manufacturing/moulding of the cellulose product, which is a time and energy consuming step leading to low production speed and substantial high investment cost in machines and tooling. Meaning that the wet-forming techniques are not feasible to replace fossil-based alternatives neither in small nor large scale production of rigid cellulose products. Thereto, the aesthetical and mechanical properties of a wet-moulded cellulose product are hard to control with desirable precision, due to un-uniform cellulose pulp and due to the wet moulding manufacturing technique *per se.*

Therefore many actors/companies, starting a few decades ago, have changed their focus and investments towards dry-forming techniques wherein rigid cellulose products are manufactured from separated cellulose fibres that are introduced into a product forming unit in the shape of a dry cellulose blank/web, wherein the cellulose blank is formed/moulded into the shape of the intended cellulose product and wherein the cellulose fibres are bonded to each other using heat and pressure, i.e. thermoforming press. The dry-forming techniques comprises different steps of generating an air-laid cellulose blank, that is transferred into a product forming unit and pressed.

Food, liquids, dairy products, meat, fish, cosmetics, tools, etc., will expose the pressed cellulose product to moisture/fat that will have negative effect on the strength and rigidity of the cellulose product, since the inherent nature/characteristics of the cellulose product entails that the moisture/fat will be absorbed, and the cellulose product will start to disintegrate instantaneously. A known solution to avoid such disintegration of the cellulose product due to absorption of moisture/fat, irrespective of wet-formed or dry-formed, is to use a plastic liner film adhered to the inside and/or outside of the pressed cellulose product in order to prevent moisture/fat to have negative effect on the strength and rigidity of the cellulose product. However, in order to have a fully recyclable lined tray that comprises a rigid cellulose tray made of cellulose fibres and a liner film, the liner film has to be easily separable from the cellulose tray after use of the container. Manual separation at home after use of the lined tray/container has to be easy and efficient, i.e. too much of the recyclable cellulose tray and/or the recyclable liner film must not remain adhered to the other component after separation. Thus, an increasing difficulty of separating the cellulose tray from the liner film entails a decreasing likelihood of the components being recycled.

The technical field of dry manufacturing rigid cellulose products having essentially non-flat general shape, such as trays, cups, plates, lids, or the like, i.e. wherein the forming/pressing is performed using a moulding tool having a first/male mould part and a second/female mould part configured to cooperate with each other, is well known. However, the sub-technical field of obtaining/manufacturing a pressed cellulose product from a dry-formed cellulose blank, wherein the cellulose product has increased resistibility to moisture and/or fat and increased resistibility to gas transmission and thereby will maintain its strength and rigidity also when exposed to food, liquids, cosmetics, etc., is still exposed to challenges.

Thus, there is a need in the art for a reliable, cheap and unharmful dry-forming technique/ process for dry manufacturing rigid cellulose products having non-flat general shape, wherein the pressed cellulose products have increased resistibility to moisture and/or fat and to gas transmission in order to maintain its strength and rigidity also when exposed to moisture/fat over long period of time. Thereto, many products/items/food are packed in a protective environment, e.g. a gas free of oxygen or an extra dry gas, in order to protect the packed item, and/or there is a need to keep the moisture level of the packed item.

Common for known attempts to obtain cellulose products having barrier properties such as resistivity to moisture and/or fat, is the fact that such additives in addition to render the cellulose fibers hydrophobic/oleophobic also obstruct/prevent hydrogen bonding between the cellulose fibres which lead to increased gas transmission through the cellulose products.

### Object of the Invention

The present invention aims at obviating the aforementioned and other disadvantages and failings of previously known methods and devices for dry manufacturing rigid cellulose products, and at providing an improved rigid cellulose product, apparatus and method for dry manufacturing rigid cellulose products having non-flat general shape, wherein the cellulose product has increased resistibility to moisture and/or fat, i.e. hydrophobic and oleophobic properties, at the same time as gas transmission through the cellulose product is reduced/eliminated.

A primary object of the present invention is to provide an improved rigid cellulose product and an improved method for dry manufacturing rigid cellulose product having increased resistibility to water/moisture and/or fat and increased resistibility to gas transmission therethrough, wherein the environmental benefits as well as time and energy saving benefits of conventional dry-forming techniques are maintained. It is also an object of the present invention to provide an improved rigid cellulose product and an improved method for dry manufacturing rigid cellulose product having increased resistibility to water/moisture and/or fat and increased resistibility to gas transmission therethrough, wherein the rigid cellulose product is biodegradable.

### Summary of the Invention

According to the invention at least the primary object is attained by means of the initially defined apparatus and method having the features defined in the independent claims. Preferred embodiments of the present invention are further defined in the dependent claims.

According to one aspect of the present invention, there is provided a method for dry manufacturing rigid cellulose products having essentially non-flat general shape from a cellulose blank of the initially defined type, wherein the method is characterized in that the cellulose blank is constituted by a primed cellulose blank that comprises a water and/or fat resistance barrier dispersion, wherein the water and/or fat resistance barrier dispersion comprises water and a barrier additive, wherein the pressed cellulose product is provided with water and/or fat resistance properties, and the method further comprises the step of adding a nano-coating to the pressed cellulose product in order to also provide gas transmission resistance properties to the final cellulose product.

According to second aspect of the present invention, there is provided an apparatus of the initially defined type, wherein the apparatus is configured to execute said method and wherein the apparatus further comprises a nano-coating unit located downstream the product forming unit and configured to add a nano-coating to the pressed cellulose product.

According to another aspect of the present invention, there is provided a rigid cellulose product having water and/or fat resistance barrier properties and gas transmission resistance properties, wherein the cellulose product is manufactured according to said method.

The present invention is based on the insight/knowledge that there is traditionally a trade-off between obtaining water and/or fat resistance barrier properties of the pressed cellulose product and maintaining the mechanical strength and compactness of the pressed cellulose product, e.g. prevent gas transmission therethrough. Thus, it is a delicate challenge to obtain intended water and/or fat barrier properties of the pressed cellulose product and at the same time obtain as intended mechanical strength and compactness of the pressed cellulose product.

Thus, the inventor has developed an effective and reliable methodology for obtaining pressed cellulose products having intended mechanical strength and compactness, and having intended barrier properties, i.e. cellulose products disclosing hydrophobic and/or oleophobic properties and gas transmission resistivity. The inventor has identified an optimal combination of activities/conditions in order to obtain such cellulose products.

Using the inventive method, the use of plastic liner films, and plastic additives, can be avoided. The cellulose products manufactured using the inventive method are configured to withstand or hold liquid, meat juice, oil/grease, etc., i.e. are prevented from absorbing moisture/fat, at the same time as the intended mechanical strength and compactness of the cellulose product are obtained. The cellulose products manufactured using the inventive method are biodegradable.

According to various example embodiments of the present invention, the barrier additive includes water, a barrier agent and a cationic stabilizer, the total amount of barrier agent and cationic stabilizer being in the range 5-20 wt% of the barrier dispersion.

According to various example embodiments of the present invention, the barrier agent is constituted by a wax compound, preferably a paraffin-based wax.

According to various example embodiments of the present invention, the step of adding the nano-coating is constituted by atomic layer deposition or by chromatografting.

According to various example embodiments of the present invention, the amount of barrier dispersion of the primed cellulose pulp sheet, is equal to or more than 0,075 millilitre per gram cellulose fibre and equal to or less than 0,3 millilitre per gram cellulose fibre. In a representative manufacturing process, this corresponds to about 100-300 millilitre barrier dispersion per square meter cellulose pulp sheet. Preferably, the barrier dispersion shall be as evenly distributed as possible over the cellulose pulp sheet, even though the barrier dispersion and cellulose fibers are further mixed in the disintegration unit.

According to various example embodiments of the present invention, the rigid cellulose product has a water resistance/absorptiveness value measured according to ISO 535:2023 (Cobb1800) in the range 65-70 g/m². The Cobb1800 value is the water absorption over 1800 seconds. With these ranges the cellulose product will withstand moisture/grease long period of time.

According to various example embodiments of the present invention, the rigid cellulose product has fat resistance of at least 96 hours at an ambient temperature in the range 20-22 °C, i.e. room temperature.

Further advantages with and features of the invention will be apparent from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1: is a schematic illustration of a production line or apparatus for dry manufacturing rigid cellulose products,
- Fig. 2: is a schematic illustration of a moulding tool, wherein a cellulose blank is provided into the moulding tool between the first/female mould part and the second/male mould part,
- Fig. 3: is a schematic illustration of the moulding tool according to figure 2 during forming/pressing of the cellulose product,
- Fig. 4: is a schematic illustration of the moulding tool according to figures 2 and 3 after the forming/pressing step and the pressed cellulose product is released from the moulding tool,
- Fig. 5: is a schematic illustration of the pressed cellulose product according to figure 4, wherein the scrap area is removed from the final cellulose product, and
- Fig. 6: is a schematic illustration of an apparatus for dry manufacturing rigid cellulose products, wherein the in-feed device provides the next cellulose blank into the moulding tool at the same time as the out-feed device removes the pressed cellulose product from the moulding tool.

### Detailed description of preferred embodiments of the invention

As used herein, the term "air/dry moulding/forming or air/dry laying/laid" means a well-known method according to which separated cellulose fibres are formed into a cellulose blank/web.

In air-laying technique, small/short fibres having a normal length in the range of 0,5 to 70 mm, for instance 1 to 10 mm, are separated and captured by an air stream/flow, and then laid on/applied to a forming mesh/surface, usually using a low pressure at the other side of the mesh/surface. The general terms "air/dry laying" and "air/dry moulding" are used interchangeably herein. The cellulose fibre carrying air flow may be generated by suitable device located upstream and/or downstream the forming mesh/surface.

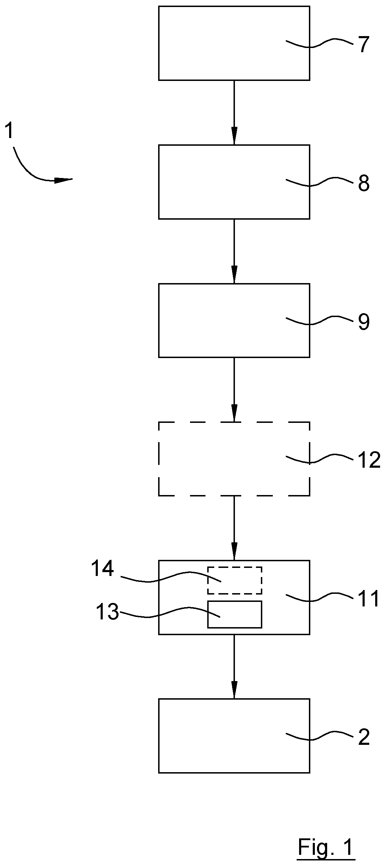

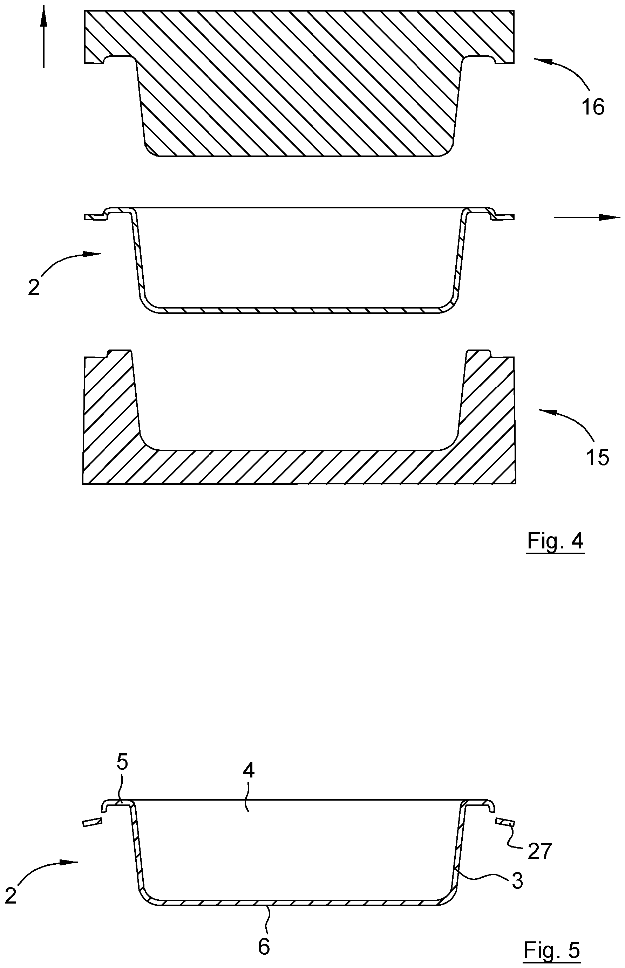

Reference is initially made to figures 1 and 5, wherein figure 1 disclose a schematic illustration of a generic production line/apparatus for dry manufacturing rigid cellulose products, wherein said apparatus is generally designated 1. The production line 1 is configured for manufacturing rigid cellulose products, generally designated 2, having essentially non-flat general shape from separated cellulose fibres. Such a production line 1 may be arranged and set-up according to different well-known ways. Figure 5 disclose an example of a rigid cellulose product/tray 2. The apparatus 1 may have automatic transfer/handling between the different process steps, and/or may have manual transfer/handling between the different process steps, and thereto the apparatus 1 may have intermediate storing and/or additional process steps between the disclosed process steps, and/or the process steps may be located at different sites.

Figure 5 disclose an example of a rigid cellulose product 2 in the shape of a tray/container, wherein the tray is formed using the inventive method. The tray 2 comprises an inclined circumferential wall 3 and an opening 4 defined by a circumferential rim/brim 5 connected to the upper/free end of the wall 3. According to figure 5 embodiment the brim 5 has an angled shape having an essentially radially extending upper surface and a turned-down outer edge, however it shall be pointed out that the cross-section of the brim 5 may have other shapes. The tray 2 may have truncated cone shape having straight wall 3, narrowing in the direction away from the opening 4, in accordance with figure 5 embodiment. The tray 2 may for instance have curved-shaped wall 3 seen in the axial plane. By having inclined walls 3 multiple trays 2 are stackable one inside the other when they are empty. The tray could also be a mug/cup, a lid, packaging or the like container/product. The cross section of the circumferential wall 3 in the radial plane may have any suitable shape, circular, oval, rectangular, polygonal, etc., and may differ in shape and/or dimension along the axial extension of the tray 2. The tray 2 comprises a bottom 6, wherein the bottom 6 is entirely flat or the bottom may comprise local ribs, projections, etc., for strength and rigidity of the cellulose product. The bottom 6 may be located at the very lower end of the wall 3, according to figure 5 embodiment, and/or be partly located at an axial distance from the lower end of the wall 3, or a combination thereof. The circumferential wall 3 is connected to and extends in the axial direction upwards from the bottom portion 6. The general shape of the disclosed tray 2 is also applicable for a lid, plate, cup, etc.

Cellulose raw material in the shape of continuous or discrete cellulose pulp sheet(s) 7, i.e. comprising mainly the cellulose part of organic matter, is provided to the production line, and is fed by a cellulose pulp sheet feeding unit to a separating/disintegrating unit 8 in order to obtain individualized/separated cellulose fibres. The separated cellulose fibres are thereafter transported by an air stream/flow to a dispenser of a cellulose blank/sheet forming unit 9. The cellulose fibres are laid by the dispenser on a moving or stationary perforated surface of the cellulose blank forming unit 9. The cellulose fibre carrying air flow may be generated by suitable device located upstream and/or downstream the perforated surface. Thereafter the generated cellulose blank, generally designated 10, is transported/ transferred to a product forming unit 11, whereby rigid cellulose products 2 are formed and discharged from the product forming unit 11.

The cellulose blank forming unit 9 may be configured to generate a continuous cellulose blank/web 10 and/or discontinuous/discrete cellulose blanks 10. Discontinuous/discrete cellulose blanks 10 are fed into the product forming unit 11.

The cellulose raw material may be in the form of reeled pulp or paper, bale of cellulose pulp, paper, etc. and/or sheets of paper, cellulose pulp, etc. In case said cellulose raw material is in the form of sheets and/or reeled pulp, it can be fed directly into the separating unit 8. However, in case said cellulose raw material is in the form of a bale or compact stacks of sheets, etc. one or more shredders and/or one or more additional separating/disintegrating units may be necessary to be used for separating and dosing said cellulose raw material 7 from said bale or sheets into cellulose pulp sheet(s) 7. The separating unit 8 disintegrates the cellulose pulp sheet 7 into separated cellulose fibres.

Said cellulose raw material may be constituted by virgin cellulose fibres and/or recycled cellulose fibres and may originate from wood pulps such as kraft pulp, sulphite pulp, mechanical pulp, thermomechanical pulp (TMP), chemical treated mechanical pulp, chemi-thermomechanical pulp (CTMP), and/or from non-wood pulps such as bagasse, bamboo, abaca, hemp, flax, cotton.

The separating unit 8 may according to various embodiments be constituted by a hammer mill. In said separating unit 8 the cellulose pulp sheet 7 is separated into fibres having a normal length in the range of 0,5-70 mm, preferably less than 10 mm. The length of said fibres may be customized by adjusting the internal properties of the separating unit 8 and/or by choosing a different separating unit 8 and/or choosing different cellulose raw material. The fibre length for wood pulp is according to various embodiments in the range 0,5-4 mm, preferably in the range 1,7-3,6 mm. According to various embodiments the fibre length for non-wood pulp is in the range 0,5-70 mm.

The production line 1 may comprise a pre-compression and/or imprinting unit 12, located downstream the cellulose blank forming unit 9 and upstream the product forming unit 11. In the pre-compression and/or imprinting unit 12, an air-laid fluffy cellulose blank 10 having a first thickness may be compressed into a cellulose blank 10 having a second thickness, wherein said second thickness is thinner than said first thickness, and/or may be provided with an imprinting pattern. During the pre-compression/imprinting the cellulose blank is made more coherent and easier to handle, since the pre-compression/imprinting generates internal bindings between individual cellulose fibres preventing mutual separation of the cellulose fibres.

The product forming unit 11 comprises a press unit 13, and may optionally comprise a pre-heating unit 14 arranged upstream the press unit 13. According to various example embodiments said cellulose blank 10 may be heated to an elevated temperature before being fed into the press unit 13 of the product forming unit 11. In such embodiment(s) where the cellulose blank 10 is preheated before being fed into the press unit 13, said press unit 13 may or may not comprise heating. According to various example embodiment said press unit 13 may be a heated press unit 13 for heating said cellulose blank 10 during pressing. In the case of a heated press unit 13, preheating of said cellulose blank 10 using a pre-heating unit 14 is optional. According to various example embodiments preheating of the cellulose blank 10 in said pre-heating unit 14 may be combined with a heated press unit 13. Having a pre-heating unit 14 in combination with a heated press unit 13 will speed up the manufacturing process in the product forming unit 11, and improve the quality/rigidity of the final rigid cellulose product 2. In the product forming unit 11 the cellulose blank 10 is heated to a forming temperature T in the range 120 - 200 °C in order to obtain adequate rigidity and strength in the final cellulose product 2, preferably in the range 150-180 °C.

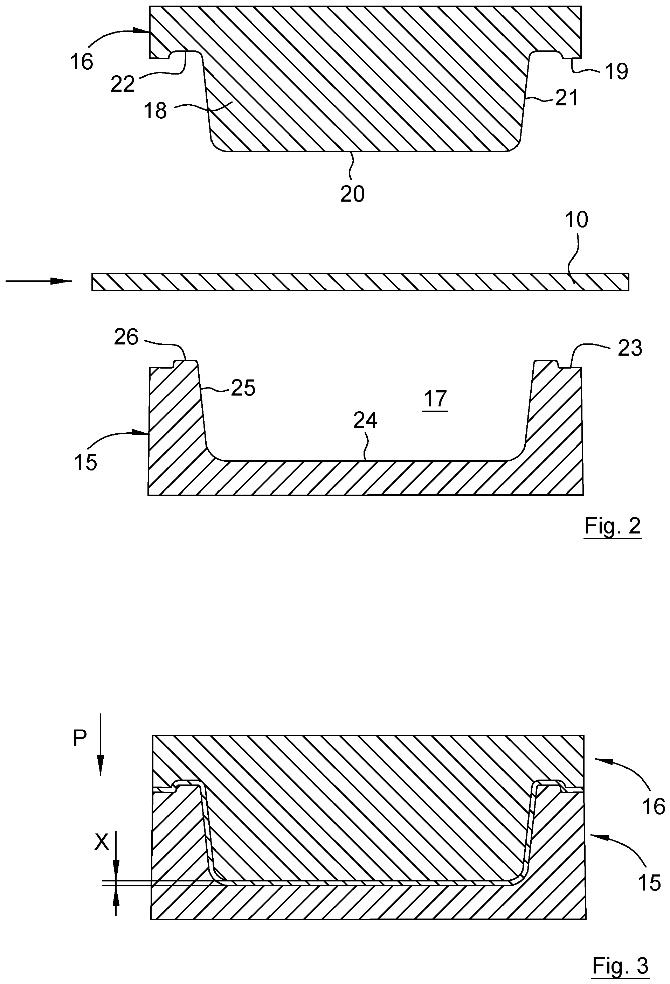

Reference is now made to figures 2-4. The press unit 13 comprises a moulding tool having a first mould part 15 and a second mould part 16 having co-operating designs, wherein at least one of the first mould part 15 and the second mould part 16 is/are displaceable in the axial direction in relation to each other, i.e. reciprocating back and forth in relation to each other, in order to exert pressure to the cellulose blank 10 loaded therebetween. In the figures the mutual displacement is disclosed as being vertical, however the mutual displacement may be horizontal or any other suitable angle. The cellulose blank 10 loaded into the moulding tool, is constituted by the air-laid cellulose blank 10. The air-laid cellulose blank 10 may be generated upstream the product forming unit 11 in the same apparatus/production line and provided/transferred to the product forming unit 11, or may be generated at a separate location and provided/transferred to the product forming unit 11 via intermediate handling and storage.

According to various embodiments the first mould part 15 of the moulding tool is a female mould part, i.e. having a main recess 17 for receiving a major part of the cellulose blank 10, and the second mould part 16 of the moulding tool is a male mould part, i.e. having a main protrusion 18 for cooperation with said recess 17 of the female mould part by being inserted therein, such that the cellulose blank 10 is pressed into a final rigid non-flat shape by applying a predetermined forming pressure P in the axial direction of the moulding tool. According to the disclosed embodiment the male mould part 16 is located above the female mould part 15, but according to alternative embodiments the female mould part may be the second mould part and may be located above the male mould part which is then the first mould part. The pressed cellulose product 2 is intended to remain in/on the first mould part 15 after the pressing of the cellulose product 2, irrespective of the angular orientation of the moulding tool.

The male/second mould part 16 comprises a product press-surface and a scrap press-surface 19 adjacent said product press-surface. In the disclosed example embodiment, the product press-surface of the second mould part 16 comprises a bottom surface 20, a wall surface 21 connected to the bottom surface 20 and extending essentially in the axial direction, and a brim surface 22 connected to the wall surface 21 and extending essentially in the transversal/radial direction. The female/first mould part 15 comprises a product press-surface and a scrap press-surface 23 adjacent said product press-surface. In the disclosed example embodiment, the product press-surface of the first mould part 15 comprises has a bottom surface 24, a wall surface 25 connected to the bottom surface 24 and extending essentially in the axial direction, and a brim surface 26 connected to the wall surface 25 and extending essentially in the transversal/radial direction. The product press-surface of the first mould part 15 and the product press-surface of the second mould part 16 are arranged opposite each other, and the scrap press-surface 23 of the first mould part 15 is arranged opposite the scrap press-surface 19 of the second mould part 16. According to alternative embodiments, the moulding tool does not comprise scrap press-surfaces, i.e. the moulding tool comprises only product press-surfaces and is configured to press/form a cellulose product in its final shape without need for trimming off scrap material.

The cellulose blank 10 is pressed between the surfaces of the male/second mould part 16 and the surfaces of the female/first mould part 15 into final shape. The mutual distance, taken perpendicular to the surface in question, between the product press-surface of the first mould part 15 and the product press-surface of the second mould part 16 during the pressing of the cellulose blank 10 into a cellulose product 2 is X millimetres, wherein X preferably is in the range 0,2-3,0 millimetres, i.e. equal to the thickness of the bottom 6 of the pressed cellulose product 2. Preferably, X is in the range 0,25-1,5 millimetres. The wall surfaces 21, 25 of the moulding tool has to be inclined in order to obtain a release angle for the cellulose product 2, and in order to obtain adequate press force to the wall region 3 of the cellulose product 2.

At a scrap area of the moulding tool, the mutual distance between the scrap press-surface of the first mould part 15 and the scrap press-surface of the second mould part 16 is equal to or more than the mutual distance between the product press-surface of the first mould part 15 and the product press-surface of the second mould part 16. The part of the cellulose blank 10 located at the scrap area may be left entirely uncompressed in the moulding tool, be partially compressed by applying a predetermined partial pressure less than said predetermined forming pressure P, or be fully compressed by applying said predetermined forming pressure P. Thus, radially outside the final rigid cellulose product 2, the cellulose blank 10 comprises a scrap area intended to be cut off. In figure 4 the cellulose product 2 is released and schematically removed from the moulding tool by opening the moulding tool. Figure 5 disclose a schematic illustration of a cellulose tray 2 wherein the scrap 27 is cut off from the cellulose tray 2. According to various embodiments, the scrap 27 may be removed in a separate step in the moulding tool, in a subsequent step outside the moulding tool after the pressing of the cellulose product 2, or in a step concurrent with the pressing of the cellulose product 2.

According to various embodiments. When the compartment of the rigid cellulose tray 2 is filled with objects, a film/cover/lid may be attached to the circumferential rim/brim 5 of the cellulose tray 2, for instance using heat lamination. The lid film may be constituted by a multilayer film comprising polymer, metal, and/or paper.

The predetermined forming pressure P is in the range 40-10000N/cm², preferably in the range 100-4000N/cm². According to various embodiments said predetermined pressures are above 500 N/cm², and according to various embodiments said predetermined pressures are below 2500 N/ cm². The holding time during the pressing step is in equal to or more than 0,5 seconds and equal to or less than 10 seconds, preferably less than 5 seconds, and most preferably less than 3 seconds.

According to various embodiments, the moisture content of the cellulose blank 10 provided into the moulding tool is in the range 5-20 wt%, preferably in the range 6-13 wt%. A too low moisture content entails that the internal bonding in the thermoformed/pressed cellulose product 2 are not strong enough and the risk of blistering/delamination of the cellulose product 2 during opening of the moulding tool is increased, and the risk for cracks is increased. A too high moisture content entails that the amount of water that is heated is increased and the risk of steam explosion/ expansion during opening of the moulding tool is increased, that may lead to blistering/delamination and cracks.

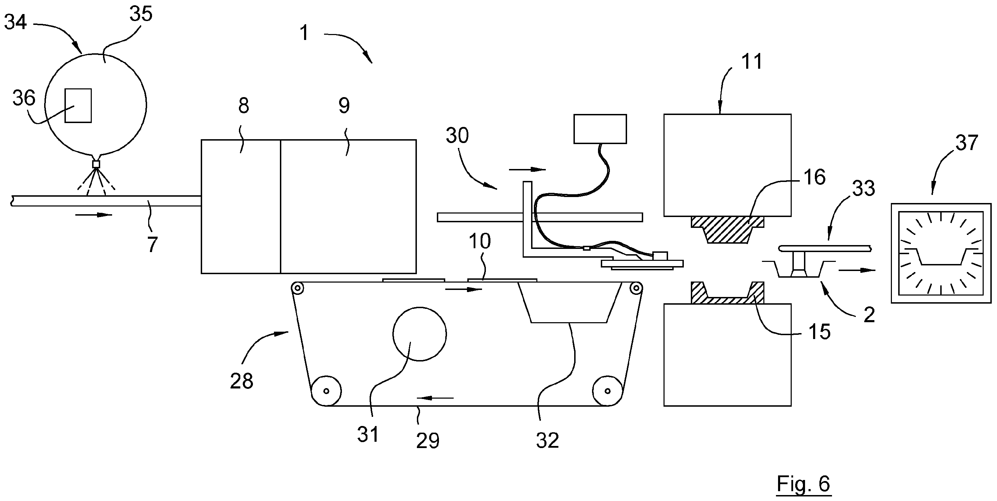

Reference is now also made to figure 6, disclosing a schematic illustration of a preferred realisation of an inventive apparatus 1 for dry manufacturing rigid cellulose products 2 having water and/or fat resistance barrier properties, i.e. hydrophobic and/or oleophobic properties, and intended mechanical compactness, i.e. gas transmission resistivity, wherein the apparatus 1 is configured to execute/perform the inventive method.

The apparatus 1 comprises a conveyor arrangement, generally designated 28. The conveyor arrangement 28 is configured to receive cellulose blanks 10 in a continuous stream from the cellulose blank forming unit 9, and transporting the continuous stream of cellulose blanks 10 in a transport direction towards the product forming unit 11. The separating/disintegrating unit 8 and the cellulose blank forming unit 9 are schematically disclosed, at the upstream end of the conveyor arrangement 28. According to alternative embodiments the cellulose blanks 10 are provided to the conveyer arrangement 28 from an intermediate storage, manually or automatically.

The conveyor arrangement 28 comprises an endless conveyor belt 29 that according to the disclosed embodiment is continuously moving during operation of the apparatus 1, and has a predetermined traveling speed in the transport direction of the conveyor arrangement 28. The traveling speed of the conveyor belt 29 is preferably adjustable, and is adjusted in consensus with the cycle rate of the product forming unit 11, and also in consensus with the cycle rate of the cellulose forming unit 9 when applicable. The traveling speed of the conveyor belt 29 is also dependent on the size of the cellulose blanks 10 in relation to the size of the mutual gap between the cellulose blanks 10. According to alternative embodiments, the conveyor belt 29 may be intermittently/stepwise moving, in order to receive cellulose blanks 10 and in order to transfer cellulose blanks towards the product forming unit 11.

The apparatus 1 further comprises an in-feed device, generally designated 30, configured for transferring the cellulose blank 10 from the conveyor arrangement 28 and loading the cellulose blank 10 into the moulding tool that is open and empty. The in-feed device 30 preferably comprises a suction device configured to engage and transfer the cellulose blank 10 from the continuously moving conveyor belt 29 into the open moulding tool. About the same time as the in-feed device 30 engages the cellulose blank 10, the preceding press cycle in the product forming unit 11 is finished and the moulding tool of the product forming unit 11 is opened.

In figure 6, the in-feed device 30 transfers the cellulose blank 10 into the moulding tool, and concurrently the pressed cellulose product 2 from the preceding press-cycle is removed from the moulding tool. The in-feed device 30 releases the cellulose blank 10 in the open moulding tool.

According to various embodiments, the cellulose blank 10 is retained on the continuously moving conveyor belt 29 by means of an air-removing arrangement 31, i.e. a fan, configured to pull the cellulose blank 10 towards the conveyor belt 29, i.e. by means of under-pressure condition. Thereby the orientation and location of the cellulose blank 10 is known and fixed, in relation to the moving conveyor belt 29. However, the air-removing arrangement 31 is not active or reduced at the position the in-feed device 30 engages the cellulose blank 10 and lifts the cellulose blank 10 from the conveyor belt 29 e.g. by means of a box/partition 32. This part of the conveyor belt 29 is also called pick-up zone.

The pressed cellulose product 2 is removed from the moulding tool by means of an out-feed device, generally designated 33. The out-feed device 33 is configured to remove the pressed cellulose product 2 from the moulding tool in order to make the moulding tool empty and ready for the loading of the next cellulose blank 10. Thus, part of the out-feed device 33 is insertable into the moulding tool between the male/second mould part 16 and the female/first mould part 15 after the pressing of the cellulose blank 10. Thus, the pressed cellulose product 2 is intended to be located in/on the first mould part 15 after the pressing of the cellulose blank 10, and after the moulding tool is opened. Thereto, the out-feed device 33 may be arranged to transfer the pressed cellulose product 2 to a subsequent step in the apparatus such as trimming of the scrap 27 and/or stacking.

The inventive method comprises the general steps of:
- providing an air-laid cellulose blank 10,
- transferring the cellulose blank 10 into the product forming unit 11,
- producing cellulose products 2 in the product forming unit 11, wherein the product forming unit 11 comprises heating means for heating the cellulose blank 10 to a forming temperature T, the product forming unit 11 comprising a moulding tool having a first mould part 15 and a second mould part 16, wherein the heated cellulose blank 10 is pressed between the first mould part 15 and the second mould part 16 by applying a forming pressure P in the axial direction of the moulding tool, and
- removing the pressed cellulose product 2 from the moulding tool,

According to various embodiments, the step of providing an air-laid cellulose blank 10, comprises the sub-steps of:
- providing a cellulose pulp sheet 7,
- disintegrating the cellulose pulp sheet 7 in order to generate a quantity of separated cellulose fibres,
- transporting the separated cellulose fibres by an air flow to a cellulose blank forming unit 9, and
- forming a cellulose blank 10 in the cellulose blank forming unit 9.

According to the inventive method, the cellulose blank 10 is a primed cellulose blank 10 that comprises a water and/or fat resistance barrier dispersion 34. The water and/or fat resistance barrier dispersion 34 comprises water 35 and a barrier additive 36, wherein the pressed cellulose product 2 is provided with water and/or fat resistance barrier properties. Preferably the water 35 of the water and/or fat resistance barrier dispersion 34 is deionized water. Deionized water 35, instead of plain water, is preferably used as a carrier in order to minimize its influence on the barrier additive 36, i.e. deionized water is used in order to avoid contamination that could lead to aggregation of the active ingredients of the barrier additive.

According to various embodiments, the cellulose blank 10 is primed downstream the blank forming unit 9, i.e. the water and/or fat resistance barrier dispersion 34 is added to the generated cellulose blanks 10 before it is provided to the product forming unit 11. According to various embodiments, the cellulose pulp sheet 7 is a primed cellulose pulp sheet 7 that comprises the water and/or fat resistance barrier dispersion 34. Thereby the cellulose blank 10 automatically becomes a primed cellulose blank 10 when generated in the blank forming unit 9. By having a primed cellulose pulp sheet 7 a more even distribution of the water and/or fat resistance barrier dispersion 34 in the cellulose blank 10 is obtained.

According to various embodiments, the barrier additive 36 includes water, a barrier agent and a cationic stabilizer, the total amount of barrier agent and cationic stabilizer being in the range 5-20 wt% of the water and/or fat resistance barrier dispersion 34. The water of the barrier additive 36 is preferably deionized water, in order to avoid contamination that could lead to aggregation of the barrier agent. The purpose of the cationic stabilizer, preferably cationic polymeric stabilizer, is to stabilize the barrier agent in the water, i.e. prevent aggregation of the barrier agent in the barrier additive 36, and to promote adhesion between the barrier agent and the cellulose fibers. According to a preferred embodiment the total amount of barrier agent and cationic stabilizer is in the range 5-15 wt%.

According to various embodiments of the invention, the barrier additive 36 has a composition of water in the range 91-78 wt%, barrier agent in the range 7-20 wt%, and about 2 wt% cationic stabilizer. The amount of barrier agent in preferably about 10 wt-%. Too low amount of barrier agent will result in insufficient barrier properties of the pressed cellulose product 2, and too high amount of barrier agent will result in weak spots in the cellulose fibre blank 10, i.e. decreased internal bindings in the cellulose fibre matrix, which will lead to severe decrease of mechanical stability of the pressed cellulose product 2, fibre release and formation of cracks of the pressed cellulose product 2 and thereby poor barrier properties.

The barrier additive 36, i.e. more precisely the barrier agent, when heated in the product forming unit 11 will melt and fill out most of the voids in the pressed cellulose product 2. Generally there is quite poor adhesion between the barrier agent and the cellulose fibres. Said adhesion is enhanced by adding the cationic stabilizer, preferably a cationic polymeric stabilizer. Nevertheless, all voids of the cellulose product 2 are not filled and thereto when the barrier agent is cooled down after pressing, it will shrink and tiny voids will appear in the pressed cellulose product 2.

According to the inventive method, the final sealing of the cellulose product 2, i.e. increasing the mechanical strength and compactness, is performed by adding a nano-coating to the pressed cellulose product 2 in order to also provide gas transmission resistance properties to the final cellulose product 2, in addition to the water and/or fat resistance barrier properties. The nano-coating of the pressed cellulose product 2 is performed in a nano-coating unit 37 located downstream the product forming unit 11. According to various embodiments, the step of adding nano-coatings is constituted by atomic layer deposition or by chromatografting. It shall be pointed out that also other techniques for nano-coating are conceivable, such as chemical vapor deposition (CVD), plasma CVD, physical vapor deposition (PVD), metal plasma-deposition, etc. The nano-coating may for instance be ceramic nano-coating or metal nano-coating. For example, during metal nano-coating small amounts of metal or metal oxides, such as aluminum or TiO₂, Al₂O₃, MgO or ZnO generates a nano-coating on the cellulose fibres.

During the step of nano-coating, which is a gaseous process, the cellulose fibres of the entire cellulose product 2 are nano-coated by the gaseous nano-particles and the cellulose product is made hydrophobic and prevents gas transmission, such as oxygen and water vapor, through the cellulose product 2. Thus, the gaseous nano-particles are small enough to enter into the tiny voids of the cellulose product 2 and attach to all internal uncovered cellulose fibre surfaces, i.e. will fill the small voids between the cellulose fibers and make the cellulose product non-permeable. Thus, the barrier agent will provide a more dense pressed cellulose product and a better condition for the nano-coating to fully seal the cellulose product 2. Thus, it is essential that the nano-coating is performed on the pressed cellulose product 2 having water and/or fat resistance barrier properties, since the combination provides synergetic technical effect regarding water, fat and gas resistance.

It shall be pointed out that the term fat resistance as used herein, may also be exchanged by the term oil and grease resistance.

The barrier agent may be constituted by a fat resistance compound, and according to various embodiments the barrier agent may be constituted by a wax compound, preferably a paraffin-based wax. The barrier agent may be constituted by a water resistance compound, and according to various embodiments the barrier agent may be constituted by AKD (alkyl ketene dimer). It shall be pointed out that a barrier agent constituted by a fat resistance compound may also provide a certain degree of water resistance, and that a barrier agent constituted by a water resistance compound may also provide a certain degree of fat resistance. The barrier agent is configured to fill out the voids between the cellulose fibres and render the cellulose fibres hydrophobic/oleophobic. The two types of barrier agent may also be used together in the same barrier additive.

According to various embodiments of the invention, the added amount of water is essentially removed/dried before feeding the primed cellulose pulp sheet 7 into the disintegration unit 8, i.e. to obtain the optimal moisture level. Having a too wet/moist cellulose pulp sheet 7 fed by the cellulose pulp sheet feeding unit into the disintegration unit 8 increase the risk that the disintegrated cellulose fibres form lumps which will have negative effect on the forming of the cellulose blank 10 in the cellulose blank forming unit 9.

According to various example embodiments of the present invention, the amount of barrier dispersion 34 of the primed cellulose pulp sheet 7 is equal to or more than 0,075 millilitre per gram cellulose fibre and equal to or less than 0,3 millilitre per gram cellulose fibre. In a representative manufacturing process, this corresponds to about 100-300 millilitre barrier dispersion 34 per square meter cellulose pulp sheet 7. Preferably, the barrier dispersion 34 shall be as evenly distributed as possible over the cellulose pulp sheet 7, even though the barrier dispersion and cellulose fibers are further mixed in the disintegration unit. The barrier dispersion 34 is preferably sprayed onto the cellulose pulp sheet 7. According to preferred embodiments of the present invention, the amount of barrier dispersion 34 of the primed cellulose pulp sheet 7, is equal to or more than 0,15 millilitre per gram cellulose fibre and equal to or less than 0,25 millilitre per gram cellulose fibre.

According to various embodiments of the invention, the rigid cellulose product 2 has a water resistance/absorptiveness value measured according to ISO 535:2023 (Cobb1800) in the range 65-70 g/m2.

According to various embodiments of the invention, the rigid cellulose product 2 has fat resistance of at least 96 hours at an ambient temperature in the range 20-22 °C, i.e. room temperature.

According to various embodiments, before the nano-coating step, the cellulose product 2 has a water resistance/absorptiveness value measured according to ISO 535:2023 (Cobb60) in the range 15-25 g/m², preferably in the range 15-20 g/m², and a fat resistance of at least 5 hours at an ambient temperature in the range 20-22 °C.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equivalents thereof. Thus, the equipment may be modified in all kinds of ways within the scope of the appended claims. Any subject matter falling outside the scope of the claims is provided for information purposes, and for placing the invention into a relevant context.

It shall also be pointed out that all information about/concerning terms such as above, under, upper, lower, etc., shall be interpreted/read having the equipment oriented according to the figures, having the drawings oriented such that the references can be properly read. Thus, such terms only indicate mutual relations in the shown embodiments, which relations may be changed if the inventive equipment is provided with another structure/design.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

## Claims

1. Method for dry manufacturing rigid cellulose products (2) having essentially non-flat general shape from an air-laid cellulose blank (10), the method comprising the steps of:
- providing an air-laid cellulose blank (10),
- transferring the cellulose blank (10) into a product forming unit (11),
- producing cellulose products (2) in the product forming unit (11), wherein the product forming unit (11) comprises heating means for heating the cellulose blank (10) to a forming temperature T, the product forming unit (11) comprising a moulding tool having a first mould part (15) and a second mould part (16), wherein the heated cellulose blank (10) is pressed between the first mould part (15) and the second mould part (16) by applying a forming pressure P in the axial direction of the moulding tool, and
- removing the pressed cellulose product (2) from the moulding tool,
the method is **characterized in that**
- the cellulose blank (10) is constituted by a primed cellulose blank (10) that comprises a water and/or fat resistance barrier dispersion (34), wherein the water and/or fat resistance barrier dispersion (34) comprises water (35) and a barrier additive (36), wherein the pressed cellulose product (2) is provided with water and/or fat resistance barrier properties, and
the method further comprises the step of:
- adding a nano-coating to the pressed cellulose product (2) in order to also provide gas transmission resistance properties to the final cellulose product (2).

2. The method according to claim 1, wherein the barrier additive (36) includes water, a barrier agent and a cationic stabilizer, the total amount of barrier agent and cationic stabilizer being in the range 5-20 wt% of the barrier dispersion (34).

3. The method according to claim 1 or 2, wherein the barrier additive (36) has a composition of:
- water in the range 91-78 wt%,
- barrier agent in the range 7-20 wt%, and
- about 2 wt% cationic stabilizer.

4. The method according to claim 2 or 3, wherein the barrier agent is constituted by a wax compound, preferably a paraffin-based wax.

5. The method according to claim 2 or 3, wherein the barrier agent is constituted by AKD (alkyl ketene dimer).

6. The method according to claim 1, wherein the step of providing an air-laid cellulose blank (10), comprises the sub-steps of:
- providing a cellulose pulp sheet (7),
- disintegrating the cellulose pulp sheet (7) in order to generate a quantity of separated cellulose fibres,
- transporting the separated cellulose fibres by an air flow to a cellulose blank forming unit (9), and
- forming a cellulose blank (10) in the cellulose blank forming unit (9).

7. The method according to claim 6, wherein the cellulose pulp sheet (7) is a primed cellulose pulp sheet (7) that comprises a water and/or fat resistance barrier dispersion (34).

8. The method according to claim 7, wherein the amount of water and/or fat resistance barrier dispersion (34) of the primed cellulose pulp sheet (7), is equal to or more than 0,075 ml per gram cellulose fibre and equal to or less than 0,3 ml per gram cellulose fibre.

9. The method according to any preceding claim, wherein the forming pressure P is in the range 0,4-100 MPa, preferably in the range 5-25 MPa.

10. The method according to any preceding claim, wherein the forming temperature T is in the range 120 - 200 °C, preferably in the range 150-180 °C.

11. The method according to any preceding claim, wherein the step of pressing the heated cellulose blank (10) is performed during a pressing time duration in the range 0,5-10 seconds, preferably in the range 0,5-5 seconds.

12. The method according to any preceding claim, wherein the moisture content of the cellulose blank (10) provided into the moulding tool is in the range 5-20 wt%, preferably in the range 6-13 wt%.

13. The method according to any preceding claim, wherein the step of adding the nano-coating is constituted by atomic layer deposition or by chromatografting.

14. An apparatus (1) for dry manufacturing rigid cellulose products (2) having essentially non-flat general shape from a cellulose blank (10), wherein the apparatus (1) comprises:
- a product forming unit (11) that comprises heating means for heating the cellulose blank (10) to a forming temperature T and a moulding tool having a first mould part (15) and a second mould part (16), wherein the moulding tool is configured to press heated cellulose blank (10) between the first mould part (15) and the second mould part (16) by applying a forming pressure P in the axial direction of the moulding tool for manufacturing cellulose products (2), and
- an out-feed device (33) configured to be inserted into the moulding tool between the first mould part (15) and the second mould part (16) after the pressing of the cellulose product (2) in order to engage the cellulose product (2), and configured to remove the cellulose product (2) from the moulding tool,
**characterized in that** the apparatus (1) is configured to execute the method according to any of claims 1-13, and **in that** the apparatus (1) further comprises a nano-coating unit (37) located downstream the product forming unit (11) and configured to add a nano-coating to the pressed cellulose product (2).

15. The apparatus (1) according to claim 14, wherein the apparatus (1) further comprises:
- a cellulose pulp sheet feeding unit,
- a disintegrating unit (8) for providing a quantity of separated cellulose fibres from the cellulose pulp sheet (7), and
- a cellulose blank forming unit (9) for forming a cellulose blank (10) from said quantity of separated cellulose fibres transported by an air flow from the disintegrating unit (8).

16. A rigid cellulose product (2) having water and/or fat resistance barrier properties and gas transmission resistance properties, **characterized in that** the cellulose product (2) is manufactured according to the method of any of claims 1-13.

17. The cellulose product (2) according to claim 15, wherein the cellulose product (2) has a water resistance/absorptiveness value measured according to ISO 535:2023 (Cobb1800) in the range 65-70 g/m², and has fat resistance of at least 96 hours at an ambient temperature in the range 20-22 °C.
